# EUROPEAN PATENT APPLICATION

(11) **EP 2 804 385 A1**
(43) Date of publication of application: **19.11.2014**
(21) Application number: 13305637.4
(22) Date of filing: 17.05.2013
(51) Int. Cl.: H04N 21/2668, H04N 21/845

(54) **Method for streaming multimedia assets, a related system and a related streaming server**

(71) Applicant: ALCATEL LUCENT, 92100 Boulogne-Billancourt (FR)
(72) Inventor: Van Den Broeck, Marc, 2860 Sint-Katelijne-Waver (BE); Godon, Marc, 1840 Londerzeel (BE)
(74) Representative: ALU Antw Patent Attorneys

(57) **Abstract**

The present invention relates to a system comprising a streaming server for streaming a plurality of multimedia assets associated with a certain broadcast-stream towards at least one client device of a plurality of client devices of the system. The streaming server comprises an asset retrieving means that is configured to retrieve the plurality of multimedia assets associated with the broadcast-stream selected by the at least one client device from a multimedia asset source. The asset retrieving means further is configured to replace an asset of the plurality of multimedia assets associated with the broadcast stream with an alternative asset if the multimedia asset is streamed before towards the at least one client device. The system further comprises an alternative asset determination means that is configured to determine the alternative multimedia asset for replacing the multimedia asset streamed before towards the at least one client device based on at least one criterion.

## Description

The present invention relates to streaming multimedia assets associated with a certain broadcast-stream towards a plurality of client devices.

It is well known to the person skilled in the art that broadcast streams such as programs on the radio or TV follow a certain pattern. Each hour, for instance, starts with a news presentation which is followed by media assets including music, interviews conversations etc.

After some period, typically half an hour or an hour, a news presentation starts again. Basically such news presentation includes a repetition of news-items which were presented before. Usually when people are listening to the radio, they basically have it playing in the background but will pay more attention to for instance a presentation of news items. Such repetition of news items or other items often is not appreciated by the listening user.

Currently such broadcast systems, i.e. digital radio and digital Television broadcasts systems show a high degree of repetition of multimedia assets being presented to users of such system.

An objective of the present invention is to provide a system of the above known type but wherein the degree of repetition has decreased.

According to an embodiment of the invention there is provided a system for streaming a plurality of multimedia assets associated with a certain broadcast-stream from a streaming server of said system towards at least one client device of a plurality of client devices included in said system. The streaming server comprises an asset retrieving means, configured to retrieve said plurality of multimedia assets associated with said broadcast-stream selected by said at least one client device from a multimedia asset source, wherein said asset retrieving means further is configured to replace an asset of said plurality of multimedia assets associated with said broadcast stream with an alternative asset if said multimedia asset is streamed before towards said at least one client device; and that said system further comprises:
an alternative asset determination means is configured to determine said alternative multimedia asset for replacing said multimedia asset streamed before towards said at least one client device, based on at least one criterion.
In this way, by replacing a multimedia asset associated with a broadcast-stream with an alternative multimedia asset if said meant multimedia asset is streamed already before towards the at least one client device and the alternative multimedia asset for replacing the multimedia asset streamed already before towards the at least one client device is determined based on at least one criterion so that device is only provided with multimedia assets not yet streamed towards the at least one client device.

Hence by monitoring the multimedia assets associated with a broadcast-stream streamed towards the at least one client device of a plurality of client devices it is determined whether or not a multimedia asset associated with a broadcast-stream is streamed already before towards at the at least one client device. In case such multimedia asset is streamed before towards the at least one client device, an alternative multimedia asset is determined based on at least one criterion, where this alternative multimedia asset is determined for replacing the multimedia asset is streamed before so that the at least one client device is only provided with new multimedia assets not yet streamed towards the at least one client device.

The at least one criterion for determining an alternative multimedia asset may be the preferences of the user of the client device, the location of the user of the at least one client device or be local news, geo dependant news, news on topics marc is interested in etc. In this way only multimedia assets that are not provided before are streamed towards the at least one client device and moreover the multimedia assets that are streamed optimum match the interest or profile of the user.

Media asset is audio fragment of audio broadcast, a video fragment of a video broadcast or a combination of both.

According to another preferred embodiment, the at least one criterion is an item of a user profile of a user of said at least one client device.

Such item may include a preference for multimedia assets to receive where the preference may be sports, particularly sports like soccer or athletics, art news, computer news, be local news, geo dependant news etc.

According to another preferred embodiment, the at least one criterion is a preference of a person related to a user of said at least one client device, where the items again may include a preferences for multimedia assets to receive where the preference may be sports, particularly sports like soccer or athletics, art news, computer news, be local news, geo dependant news etc. It is here assumed that people with a certain relation may have common interests in some areas. Hence by using preferences of a person related to the user of a client device, multimedia assets may be determined that are of interest as well for the user of the at least one client device.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig.1 represents an implementation of a system for streaming multimedia assets according to the present invention.
Fig. 2 represents functional representation of a streaming server and a client device of a plurality of client devices according to the present invention.

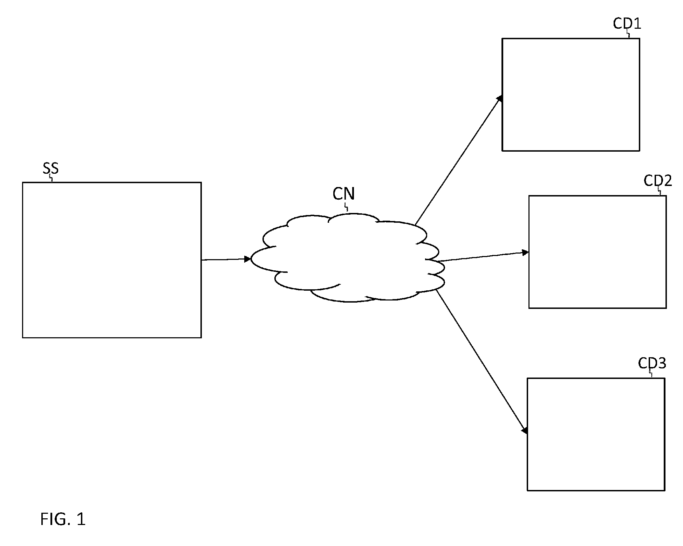

In the following paragraphs, referring to the drawing in FIG.1, an implementation of the system is described. In the second paragraph, all connections between mentioned elements are defined.

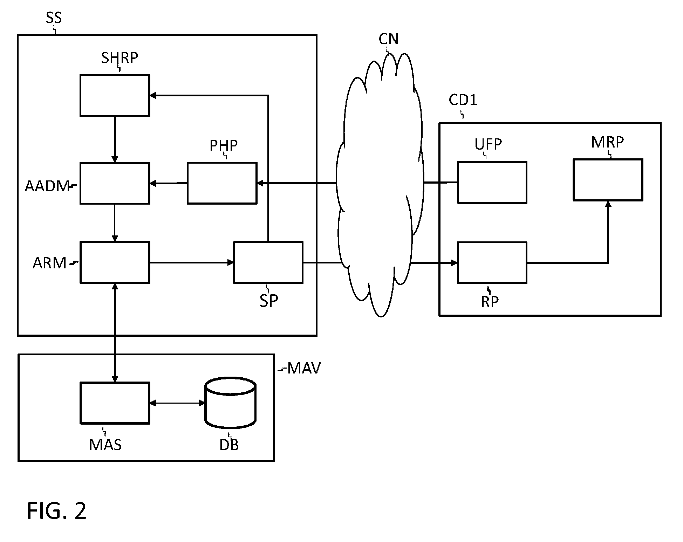

Subsequently all relevant functional means of the mentioned system as presented in FIG.2 are described followed by a description of all interconnections. In the succeeding paragraph the actual execution of the system is described.

A first essential element of the system according to the present invention is a Streaming server SS for streaming a plurality of multimedia assets associated with a certain broadcast-stream towards at least one client device CD1 of a plurality of client devices. The system further comprises the client devices CD2, CD3.

Such streaming server SS may be an element of a content cluster or service node in a multimedia content delivery network (see http://en.wikipedia.org/wiki/Content delivery network)

The first client device CD1 is an Internet protocol connected radio being equipped with a set of speakers for rendering the received multimedia asset. Furthermore, the second client device CD2 may be a IP connected computer terminal being equipped with a screen and a set of speakers for rendering a multimedia asset streamed by the streaming server SS towards the client device CD2 and the third client device CD3 may be a IPTV connected television set coupled via a set-top box to the internet, where this device again is equipped with a screen with a set of speakers for rendering a multimedia asset streamed.

It is to be noted that although such system usually comprises a plurality of such client devices for reasons of simplicity only client devices CD1, CD2 and CD3 are disclosed.

The streaming server SS further is coupled to each client device of the plurality of the client devices CD1, CD2, CD3 over a communications network CN. Such communications network CN may include a Digital subscriber line access network with coupled DSL modems or may include a cable network, a mobile communication access network with connected Smartphone or tablet devices or other suitable communications network.

Further, the Streaming server SS first comprises an asset retrieving *means ARM* that is configured to retrieve the plurality of multimedia assets associated with the broadcast-stream that is selected by the least one client device CD from a multimedia asset source MAS. The asset retrieving means ARM further is configured to replace an asset of the plurality of multimedia assets associated with the broadcast stream with an alternative asset if the multimedia asset is streamed before towards the at least one client device CD1 and in this way generate a stream of multimedia assets that are tailored to the receiving client device CD1.

The streaming server SS additionally includes an *alternative asset determination means AADM* that is configured to determine the alternative multimedia asset for replacing the multimedia asset streamed before towards the at least one client device CD1 based on at least one criterion.

The streaming server further includes a *streaming part SP* that is configured to forward the generated broadcast stream of multimedia assets that are tailored to the user of receiving client device CD1 by means of streaming or alternatively by means of an on-channel public overwrite (analogue) or by inband on-channel overwrite in an analogue digital hybrid transmission system using the embedded digital transmission channel. (ref.: http://en.wikipedia.org/wiki/In-band_on-channel).

Additionally such a streaming server SS may include a *preferences holding part PHP* that is configured to obtain preferences of a user of a client device CD1 or a person associated to such user and additionally may comprise *a streaming history retrieval part SHRP* configured to obtain a history on media assets streamed to a client device CD1 of the plurality of client devices CD1, CD2 and CD3.

The *streaming history retrieval part SHRP obtains the history on the* media assets streamed to each client device of the plurality of client devices CD1, CD2 and CD3. *Either the streaming history retrieval part SHRP retrieves the history stored at the streaming part SP or alternatively the streaming part pushes the history on the* media assets streamed to each client device towards the *streaming history retrieval part SHRP.*

Furthermore, the system includes a *media asset vault MAV* that comprises a *media asset source MAS* e.g. coupled to a database DB that inter alia contains media assets associated to a plurality of broadcast streams and is configured to provide requested multimedia assets associated with the broadcast-stream selected by the least one client device CD1 to the streaming server SS.

Finally, the media asset vault MAV may include a database for factually storing inter alia the media assets associated to a plurality of broadcast streams.

Additionally the system includes a client device CD1 having a *receiving part RP* configured to receive the streamed multimedia assets associated with the selected broadcast-stream (and additionally replaced multimedia assets ) and a rendering part MRP configured to render the received broadcast-stream to the user of the client device CD1. Moreover, the client device CD1 optionally may comprise a *user preference forwarding part UFP* configured to forward user preferences of the user of the client device CD1 which user preferences are being stored at the client device CD1.

Alternatively the user preferences of the user corresponding to client device CD1 are stored centrally at a server such as the streaming server SS so that these preferences are available continuously in which case the *user preference forwarding part UFP* takes care of updating the user preferences of the corresponding user of the client device CD1.

The structure of each client device of the plurality of client devices CD2 and CD3 is substantially equal to that of client device CD1.

The *streaming history retrieval part SHRP* has an input terminal that is coupled to an output terminal of the streaming part SP and additionally has an output that is coupled to the *alternative asset determination means AADM* that additionally has a further input coupled to an output of the *preferences holding part PHP* that comprises an input-terminal that is at the same time an input-terminal of the streaming server SS.

The *alternative asset determination means AADM* further is coupled to the asset retrieving means ARM. The asset retrieving means ARM further is coupled to the streaming part SP and additionally has an input/output-terminal that is at the same time an input/output terminal of the streaming server SS which input/output terminal of the streaming server is coupled to an input/output terminal of the media asset vault MAV.

The client device CD1 has an input-terminal that is at the same time an input-terminal of the r*eceiving part RP* that in turn is coupled to the rendering part RP. The *receiving part RP further is coupled to the* rendering part MRP.

The user *preference forwarding part UFP* further may comprise an output-terminal that is at the same time an output terminal of the client device CD1.

In order to explain the execution of the present invention it is supposed that a radio programs follow a certain pattern, e.g. each hour for example starts with 5 minutes of News, then a musical program starts where music is played, people being interviewed etc. After, for instance half an hour or an hour, the news starts again. Basically repeating the same news we heard half an hour ago. Although, it is not completely the same situation in case of television broadcasts a similar issue may occur and hence the present invention may also be applicable for video broadcast systems.

When people listen to the radio, they basically have it playing in the background but will give more attention to the News items to listen actively. At repetion of the same news items, it often is disappointing to listen to the same news again.

Currently, in the prior art situation, a streaming server SS, streams a plurality of multimedia assets associated with a certain broadcast-stream towards at least one client device CD1.

In case of the present invention,at first, a person, e.g. Marc tunes in to the radio stream, using client device CD1 being an IP connected radio, the system remembers or registers the Identification of the listening device, i.e. the client device CD1 where the identification may be the Internet protocol address of the client device CD1, in which case the IP address uniquely identifies the identifying the user device or the associated user.

Alternatively, the identification of the user that is e.g. the user-id if the user applied his Identification or password could be applied for uniquely identifying the user.

In the mean time, preferably at start up, e.g. at identification of the client device CD1 or of the corresponding user i.e. Marc, the *user preference forwarding part UFP has provided the* user preferences of the user of the client device CD1, i.e. Marc whose user preferences are being stored at the client device CD1, to the *preferences holding part PHP* of the streaming server SS that obtains the preferences of a user of a client device CD1, Marc or additionally also on a person associated to Marc, e.g. a relative or friend of Marc.

Moreover, the *streaming history retrieval part SHRP* obtains a history on media assets already streamed to the client device CD1, i.e. to the IP connected radio CD1 of Marc from the streaming Part SP.

Subsequently, after registering at the system at the streaming server SS by means of providing his user ID and password, Marc selects the broadcast stream of Studio Brussel in order to listen to the 9:00 O'Clock news at this radio station.

First, the *alternative asset determination means AADM* asks the *streaming history retrieval part SHRP* which multimedia assets Marc already listened today. Since Marc has just started listening to the radio after registering the IP connected radio CD1, he hasn't heard news yet, and hence the *alternative asset determination means AADM* sends a signal towards the asset *retrieving means ARM* that no media assets are listened yet and no alternative multimedia assets need to be rendered. Hence, the asset retrieving means ARM of the streaming server SS first requests this broadcast stream of Studio Brussels at the media asset source MAS of the media asset vault MAV and subsequently retrieves the media assets associated with this broadcast-stream of studio Brussels, which was selected by Marc, using his IP connected radio CD1, from the coupled multimedia asset source MAS. The retrieved media asset of the retrieved broadcast stream subsequently is streamed by the *streaming part SP* of the streaming server SS towards the IP connected radio CD1 of Marc. The *receiving part RP* at the IP connected radio CD1 of Marc, subsequently receives the streamed multimedia assets associated with the selected broadcast-stream of Studio Brussels whereafter the rendering part RP, i.e. the speakers of the IP connected radio CD1 of Marc render, i.e. play the received broadcast-stream of Studio Brussels to Marc, being the corresponding user of the client device CD1.

Since Marc hasn't listened to the news yet, the rule engine sends the most important news items from the news server to Marc.

An hour later, it's time for another news session, the 10 O' Clock news session.

*Then first, either the streaming history retrieval part SHRP retrieves the updated history stored at the streaming part SP or alternatively the streaming part pushes the updated history on the* media assets streamed to each client device towards the *streaming history retrieval part SHRP.*

The *alternative asset determination means AADM* asks the *streaming history retrieval part SHRP* to provide the history on media assets already streamed to the client device CD1, i.e. to the IP connected radio CD1 of Marc to the *alternative asset determination means AADM. The alternative asset determination means AADM* based on the obtained history determines that which news items Marc already heard on the news today .

The *streaming history retrieval part SHRP* now reports to the *alternative asset determination means AADM* that news items A, B and C have allready been listened by marc. The *alternative asset determination means AADM, that is* configured to determine the alternative multimedia asset for replacing the multimedia asset streamed before towards the at least one client device CD1 based on at least one criterion, e.g. the user preferences will now decide on marc's preferences which news item to stream and which were not yet heard by Marc.

This can be local news, geo dependant news, news on topics marc is interested in etc.

Subsequently, the *alternative asset determination means AADM* instructs the asset retrieving means ARM to retrieve alternative multimedia assets for rendering at client device CD1 based on the preferences of Marc. This can be local news, geo dependant news, news on topics marc is interested in etc. In this way the news is never the same and new and relevant or interesting topics on the news are rendered to Marc.

Hence, the asset retrieving means ARM retrieves based on the instruction of *alternative asset determination means AADM* new multimedia assets from the media asset source MAS for replacing the multimedia assets that Marc heard already. Consequently, the asset retrieving means ARM generates a broadcast stream by replacing the multimedia assets of the Studio Brussels broadcast stream, which are heard already, with alternative assets, where the alternative assets are based on the preferences of marc as instructed by the *alternative asset determination means AADM.*

*Hence the* asset retrieving means ARM generates an adapted broadcast stream consisting of the studio Brussels broadcast steam by replacing the already listened multimedia assets by new relevant or interesting topics on the news e.g. based on Marc's preferences.

The *streaming part SP* then forwards the generated broadcast stream of multimedia assets that are tailored to the receiving client device CD1 by means of streaming. This generated broadcast stream subsequently is received by the receiving part RP of the IP connected radio of Marc rendered by means of the rendering part MRP. Then, again either the streaming history retrieval part SHRP retrieves the updated history stored at the streaming part SP or alternatively the streaming part pushes the updated history on the media assets streamed to each client device towards the streaming history retrieval part SHRP.

Whenever a news item has been played for a user, the next time he will hear the news the rule engine won't play this news item anymore but will replace it with a alternative news item (depending on important new news items, user preferences etc...)

This invention tries to bring people more newsitems by remembering what the listeners already heard and presenting then new topics they could be interested in.

Any broadcast stream including e.g. news or other multimedia assets can be composed on a per user basis.

It is to be noted that although the previously described embodiment disclosed Internet Protocol IP based couplings between the client devices CD1, CD2 and CD3 and the streaming server SS, alternatively other couplings may be applicable as well.

Additionally it is to be noted that an application executable by a certain user device, such as a smartphone a personal computer or even another device that is configured to execute such application, where the application is able to collect kind of history on media assets already listened to by the connected user e.g and additionaly is configured to pass the history information towards the *preferences holding part PHP* of the streaming server SS so that the streaming server is able to base the selection and retrieval of alternative media assets additionally based on history information collected by any client device of the user, even a device the user does not apply for consuming, e.g. listening and/or viewing such multimdia assets.

In an additional embodiment we can introduce the concept of automatic behavior user preferences. Let's say the user preferences are assigned a certain weight or priority. For instance if a user is interested in Sports, in particular cycling and skiing but in addition also in skating, although the user is more interested in skiing and cycling than skating. Both, cycling and skiing are assigned a weight of 100 while skating is assigned a weight of 80. Further when the system senses that the user just zaps at a time when he is listening to a clip about cycling, then the weight for cycling is decreased with a few points, from 100 to say 95. In case the user listen all the clips about skating indeed, then skating is assigned with a slightly higher weight say from 80 to 85. Hence, at some time skating will be assigned a higher weight than cycling just based on the user's listening habits or viewing behavior in case of video assets.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

**1.** System comprising a streaming server (SS) for streaming a plurality of multimedia assets associated with a certain broadcast-stream towards at least one client device (CD1) of a plurality of client devices of said system, said streaming server (SS) comprising:
a. an asset retrieving means (ARM), configured to retrieve said plurality of multimedia assets associated with said broadcast-stream selected by said at least one client device (CD1) from a multimedia asset source (MAS), *wherein* said asset retrieving means (ARM) further is configured to replace a multimedia asset of said plurality of multimedia assets associated with said broadcast stream with an alternative multimedia asset if said multimedia asset is streamed before towards said at least one client device (CD1); and wherein said system further comprises:
b. an alternative asset determination means (AADM) configured to determine said alternative multimedia asset for replacing said multimedia asset streamed before towards said at least one client device (CD1), based on at least one criterion.

**2.** System according to claim 1, *wherein* said at least one criterion is a user profile of a user associated with said at least one client device.

**3.** System according to claim 1 or 2, *wherein* said at least one criterion is preference of a person related to a user associated with said at least one client device.

**4.** Streaming server (SS) for use in a system comprising said streaming server (SS) for streaming a plurality of multimedia assets associated with a certain broadcast-stream towards at least one client device (CD1) of a plurality of client devices of said system, said streaming server (SS) comprising:
a. an asset retrieving means (ARM), configured to retrieve said assets associated with said broadcast-stream selected by said at least one client device from a multimedia asset source (MAS), wherein said asset retrieving means (ARM) further is configured to replace a multimedia asset associated with said broadcast with an alternative multimedia asset if said asset is streamed already towards said at least one client device.

**5.** Streaming server (SS) according to claim 4, *wherein* said streaming server (SS) further comprises an alternative asset determination means (AADM) adapted to determine said alternative multimedia asset for replacing said multimedia asset streamed already towards said at least one client device, based on at least one criterion.

**6.** Streaming server (SS) according to claim 5, *wherein* said streaming server (SS) further comprises *streaming history retrieval part SHRP configured to determine said multimedia asset* streamed already towards said at least one client device *based on the history on the* media assets streamed to each client device of said plurality of client devices (CD1, CD2, CD3)

**6.** Streaming server (SS) according to claim 5, *wherein* said at least one certain criterion is a user profile of a user associated with said at least one client device.

**7.** Streaming server (SS) according to claim 5 or 6, *wherein* said at least one certain criterion is preference of a person related to a user associated with said at least one client device.

**8.** Method for streaming multimedia assets associated with a certain broadcast-stream from a streaming server (SS) towards at least one client device (CD1) of a plurality of client devices, said method comprising the steps of:
a. retrieving said plurality of multimedia assets associated with said broadcast-stream selected by said at least one client device from a multimedia asset source (MAS), *wherein* said method further comprises step of:
b. replacing a multimedia asset associated with said broadcast-stream with an alternative multimedia asset if said multimedia asset is streamed already towards said at least one client device; and
c. determining an alternative multimedia asset for replacing said multimedia asset streamed before towards said at least one client device (CD1), based on at least one criterion.

**9.** Client device (CD1) for use in a system according to claim 1.
